# EUROPÄISCHE PATENTSCHRIFT

(11) **EP 1 427 516 B1**
(45) Veröffentlichungstag und Bekanntmachung des Hinweises auf die Patenterteilung: **17.02.2010**
(21) Anmeldenummer: 02779303.3
(22) Anmeldetag: 04.09.2002
(51) Int. Cl.: B01D 67/00, B01D 69/02, B01D 39/16, B29C 44/34, C08L 1/08

(54) **FILTRATIONSMEMBRAN**
FILTRATION MEMBRANE
MEMBRANE DE FILTRATION

(30) Priorität: 18.09.2001 DE 10145968
(43) Veröffentlichungstag der Anmeldung: 16.06.2004
(73) Patentinhaber: Sartorius Stedim Biotech GmbH, 37079 Göttingen (DE)
(72) Erfinder: KLÖTZER, Rebecca, 36039 Fulda (DE)
(74) Vertreter: Müller-Boré & Partner Patentanwälte
(86) Internationale Anmeldenummer: PCT/EP2002/009904
(87) Internationale Veröffentlichungsnummer: WO 2003/024576

(56) Entgegenhaltungen:
- EP-A- 0 707 935
- EP-A- 0 754 488
- WO-A-99/38604
- US-A- 4 473 665
- US-A- 6 005 013

## Beschreibung

Die vorliegende Erfindung betrifft poröse Formkörper, insbesondere Membranen, mit einer neuartigen porösen Struktur auf Basis von thermoplastischen Polymeren sowie ein Verfahren zur Herstellung derartiger Formkörper, insbesondere Membranen. Derartige Membranen können als Filtrationsmembranen verwendet werden.

Aus dem Stand der Technik sind poröse Formkörper, insbesondere solche in Form von Membranen zur Filtration von Fluiden im Mikro- und Makrofiltrationsbereich wie z.B. zur Vor- und Entfiltration von flüssigen Medien in der Industrie, in Labors und im Umweltschutzbereich, bekannt. Beispielsweise werden in der WO 99/38604 geschäumte poröse Membranen aus thermoplastischen Polymeren beschrieben, die eine hohe Offenzelligkeit von mindestens 80% und ein Hohlraumvolumen von mindestens 75% aufweisen. Diese Membranen zeigen bereits gute Filtrationseigenschaften, jedoch sind noch einige Parameter, wie Selektivität und Fluß der Membranen, bedarfsabhängig verbesserbar.

Somit liegt der vorliegenden Erfindung die Aufgabe zugrunde, neuartige poröse Formkörper, insbesondere Filtrationsmembranen, welche einen sehr hohen Fluss bei gleichzeitig hoher Selektivität aufweisen sollen, bereitzustellen.

Diese Aufgabe wird durch die in den Ansprüchen gekennzeichneten Ausführungsformen gelöst. Insbesondere wird ein poröser Formkörper auf Basis von mindestens einem thermoplastischen Polymer bereitgestellt, der durch eine Schaumstruktur, umfassend Poren bzw. Zellen, welche mindestens teilweise offen sind, als poröse Primärstruktur und Poren in den Porenwände als poröse Sekundärstruktur, gekennzeichnet ist. Vorzugsweise weist eine derartige, den erfindungsgemäßen Formkörper aufbauende Schaumstruktur Poren als poröse Primärstruktur mit einer Offenzelligkeit ≥ 75% und ein Hohlraumvolumen ≥ 85%, vorzugsweise ≥ 95%, auf. Der erfindungsgemäße Formkörper kann insbesondere in Form einer Membran zur Filtration von Fluiden im Mikro- und Makrofitrationsbereich wie z.B. zur Vor- und Entfiltration von flüssigen Medien in der Industrie, in Labors und im Umweltschutzbereich, vorliegen.

Vorzugsweise liegt der erfindungsgemäße Formkörper als Membran mit einer Schaumstruktur auf Basis von mindestens einem thermoplastischen Polymer vor, wobei die Schaumstruktur Poren als poröse Primärstruktur mit einer Offenzelligkeit ≥ 75% und Poren in den Porenwänden als poröse Sekundärstruktur umfaßt und ein Hohlraumvolumen ≥ 85% %, vorzugsweise ≥ 95%, aufweist. Die poröse Primärstruktur aufbauenden Poren weisen eine sphärische oder polyedrische Form auf und grenzen aneinander durch eine Porenwand mit einer Wanddicke vorzugsweise im Bereich von etwa 10⁻⁷ m. Die Porengröße ist im allgemeinen in Abhängigkeit von den Herstellungsbedingungen, wie nachstehend erläutert, einstellbar. Vorzugsweise weisen die Poren eine einheitliche Porengröße im Bereich von 1 µm bis 200 µm, mehr bevorzugt 30 µm bis 200 µm, auf. Die Schaumstruktur weist in Abhängigkeit von der Porengröße üblicherweise eine Porendichte (Zelldichte) von etwa 10⁶ Poren/cm³ bei Porengrößen von etwa 200 µm und etwa 10¹³ Poren/cm³ bei Porengrößen von etwa 1 µm auf. Die Standardabweichung des mittleren Porendurchmessers der offenen Poren in der porösen Primärstruktur beträgt vorzugsweise < 20%.

Die Porenwände der Poren sind nicht dicht, sondern zeigen eine porenausbildende Perforierung, welche als "poröse Sekundärstruktur" bezeichnet wird. Diese Poren bzw. netzartigen Perforierungen bzw. Netzöffnungen weisen einen Porendurchmesser ≤ 10 µm, vorzugsweise 0,1 µm bis 10 µm auf.

Im Rahmen der vorliegenden Erfindung können als thermoplastische Polymere vorzugsweise amorphe und/oder teilkristalline thermoplastische Polymere, ausgewählt aus Polyolefinen wie Polypropylen, Polyestern, Polyamiden, Polysulfonen, Polyethersulfonen, Polystyrol, Cellulosederivaten, deren Substitutionsprodukte und Gemischen davon, für die erfindungsgemäße Struktur, umfassend Poren als poröse Primärstruktur und Poren in den Porenwänden als poröse Sekundärstruktur, eingesetzt werden.

Die erfindungsgemäßen Membranen können unverstärkt oder ein- oder beidseitig verstärkt sein. Insbesondere können die Verstärkungsmaterialien beispielsweise ein- oder beidseitig eine erfindungsgemäße Membran tragen oder eine erfindungsgemäße Membran ein- oder beidseitig verstärken. Als Verstärkungsmaterialien können Folien, Gewebe, Gewirke oder Vliese aus metallischen oder polymeren Materialien verwendet werden. Bevorzugt werden Materialien aus Polymerfasern eingesetzt, deren Polymer der gleichen Polymergruppe angehört wie das die Schaumstruktur der erfindungsgemäßen Membran aufbauende Polymer oder Polymergemisch. In einer bevorzugten Ausführungsform der vorliegenden Erfindung bestehen die Polymerfasern aus einem ersten hochschmelzbaren und hochfesten Kernpolymer, dessen Oberfläche vollständig oder teilweise von einem zweiten Polymer bedeckt ist. Derartig aufgebaute Membranen sind besonders formstabil. Das zweite Polymer hat einen geringeren Schmelzpunkt als das erste Kernpolymer und ist chemisch beständig. Vorzugsweise gehört es der gleichen Polymergruppe an wie das die Schaumstruktur der erfindungsgemäßen Membran aufbauende Polymer oder Polymergemisch.

Die Figuren zeigen:

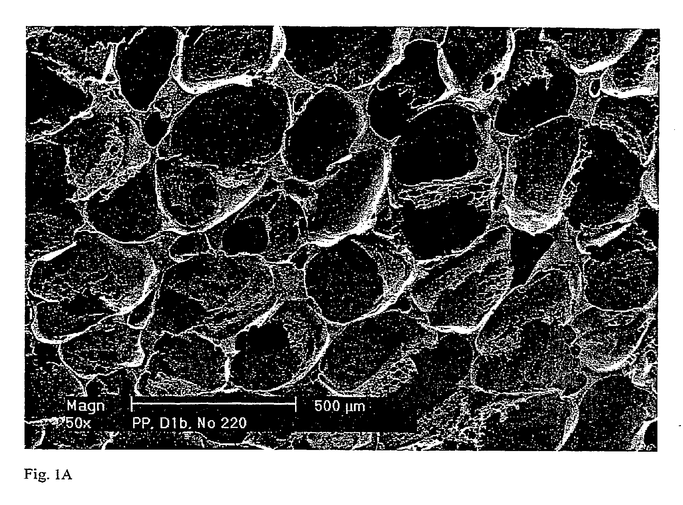

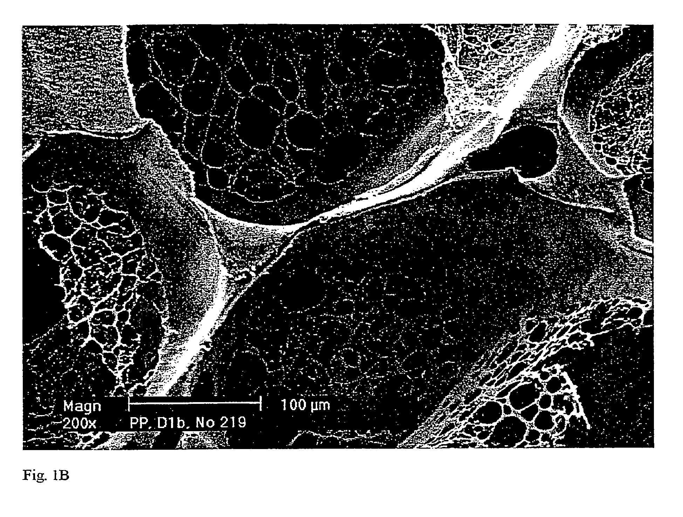

Die Figuren 1A und 1B sind Abbildungen von rasterelektronenmikroskopischen Aufnahmen durch den Querschnitt einer Filtrationsmembran aus geschäumten Polypropylen in 60-facher (A) und 200-facher (B)-Vergrößerung, welche gemäß Beispiel 1 hergestellt worden ist. Die Proben wurden durch spröden Bruch in flüssigem Stickstoff hergestellt. In (A) ist deutlich die poröse Primärstruktur mit einer einheitlichen Porengröße von 100 bis 200 µm bei einer Porendichte von etwa 10⁶ Poren/cm³ zu erkennen. In (B) ist die poröse Sekundärstruktur aufgrund der Perforierung der Zellwände zu erkennen. Die Poren weisen einen Durchmesser in der Größenordnung von etwa 10 µm auf.

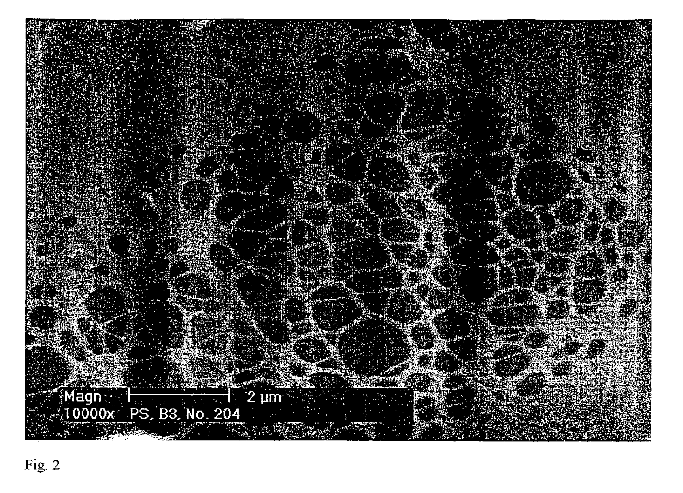

Figur 2 zeigt eine rasterelektronenmikroskopische Aufnahme einer perforierten Porenwand in 10 000-facher Vergrößerung, wobei in dieser Probe die Netzöffnungen ("Porendurchmesser") eine Größenordnung von ≤ 1 µm aufweisen.
Figur 3 zeigt eine rasterelektronenmikroskopische Aufnahme einer erfindungsgemäßen Schaumstruktur gemäß Beispiel 2.

Bei Verwendung als Filtrationsmembran zeigt die erfindungsgemäße Schaumstruktur, bei der die Porenwände einer vergleichsweise grobporigen Matrix eine Vielzahl netzartiger Perforierungen bzw. Netzöffnungen mit geringeren Durchmessern als die Durchmesser der Poren der grobporigen Matrix, d.h. eine Art "Doppelstruktur", aufweisen, überraschenderweise einen sehr hohen Fluss bei gleichzeitig hoher Selektivität. Im Gegensatz zu im Stand der Technik bekannten Membranen mit symmetrischer oder asymmetrischer Schwamm- oder Fingerstruktur zeigt die neuartige Schaumstruktur der erfindungsgemäßen Membran quasi hintereinander geschaltete Filterflächen im Abstand einer Schaumporengröße. Dadurch wird die effektive Membrandicke und der Widerstand im Gegensatz zu herkömmlichen dreidimensionalen Schwammstrukturen klein.

Das Hohlraumvolumen in % wird nach der Formel (1-Rohdichte/Polymerdichte) x 100 berechnet. Die Rohdichte ist definiert als Schaummasse pro Volumeneinheit und wird durch Wägung der Masse und der Berechnung des Volumens aus der linearen Abmessung eines geeigneten Probenkörpers bestimmt.

Die Offenzelligkeit bzw. Offenporigkeit, d.h. der Anteil an offenen Poren in %, wird mit Hilfe eines Luftvergleichspyknometers gemessen. Bei dieser Methode läßt sich durch den Vergleich eines geometrischen Volumens eines Probenkörpers mit einem Referenzvolumen bei gleichem Druck die Luftverdrängung durch den Schaumstoff ermitteln, d.h. dasjenige Volumen, welches den geschlossenen Poren einschließlich der Schaummasse entspricht. Der Fehler, der sich durch angeschnittene Poren in der Oberfläche ergibt, wird durch Messungen an Probekörpern mit vaiierenden Oberflächen-/Volmenverhältnis korrigiert. Die Offenzelligkeit wird durch Extrapolation der gemessenen Offenzelligkeit auf ein Oberflächen-/Volumenverhältnis von Null bestimmt.

Die Porengrößenverteilung wird aus dem Verlauf der Luftdurchflußkurven als Funktion des Druckes an der benetzten Membran, deren Poren mit im Handel erhältlichen, üblicherweise hierzu verwendeten Porenfüller gefüllt werden, bestimmt. Der Luftdurchfluß wird mit Hilfe eines Coulter-Porosimeters gemessen.

Ein weiterer Gegenstand der vorliegenden Erfindung betrifft ein Verfahren zur Herstellung der vorstehend definierten erfindungsgemäßen Formkörper, insbesondere Membranen, worin ein Porenbildner bzw. Zellbildner, enthaltend ein Gas oder Gasgemisch, zu einer Polymerschmelze aus mindestens einem amorphen und/oder teilkristallinen Polymer in einer Extrusionsvorrichtung gegeben wird, das Gemisch aus Polymerschmelze und Porenbildner in einer Mischeinrichtung zu einer einphasigen bzw. homogenen Schmelze verarbeitet wird und der Porenbildner nach Durchleiten durch eine formgebende Düse die einphasige Schmelze durch den eintretenden Druckabfall unter Erhalt der erfindungsgemäßen Schaumstruktur aufschäumt, wobei der Porenbildner in einer derartigen Menge zugegeben wird, daß die Gesamtkonzentration an in der einphasigen Schmelze gelöstem Gas oder Gasgemisch > 4 Gew.-%, bezogen auf das eingesetzte Polymer, beträgt und die Verarbeitungstemperatur der einphasigen Schmelze unterhalb der Verarbeitungstemperatur der Polymerschmelze liegt. In einer bevorzugten Ausführungsform des erfindungsgemäßen Verfahrens enthält das Gas oder Gasgemisch CO₂ und/oder He. Die Verarbeitungstemperatur der Schmelze liegt vorzugsweise zwischen 20-100 °C unterhalb der Verarbeitungstemperatur der Polymerschmelze. Der Begriff "Verarbeitungstemperatur" bedeutet in diesem Zusammenhang die vom jeweiligen Hersteller empfohlene Verarbeitungstemperatur des reinen Polymers, d.h. ohne Porenbildner, bei der ein einwandfreies Arbeiten des Extruders gewährleistet ist.

Die allgemeinen Verfahrensschritte zur Herstellung der erfindungsgemäßen Formkörper bzw. Membranen sowie die Extrusionsvorrichtung sind in der WO 99/38604 beschrieben. Insbesondere wird eine Polymerschmelze aus mindestens einem amorphen oder teilkristallinen Polymer unter Druck (60 bis 100 bar) durch den Ein- oder Doppelschneckenextruder einer Extrusionsvorrichtung geführt. Im zweiten Drittel des Extruders wird der Porenbildner zugeführt. Dies ist beispielsweise ein Gas oder Gasgemisch aus Kohlendioxid, Stickstoff, Helium oder ein anderes inertes Gas. Dabei wird mehr Porenbildner in die Polymerschmelze injiziert, als sich unter den an der Injektionsstelle herschenden Temperatur- oder Druckverhältnissen in der Polymerschmelze thermodynamisch lösen kann, d.h. das Gas oder Gasgemisch liegt im Überschuß vor. Nach dem Extruderzylinder kann wahlweise eine Kühlverlängerung benutzt werden, um die Mischwirkung des Extruders zu erhöhen. Die Polymer-/Gas-Mischung wird anschließend über eine Zahnradpumpe in eine zusätzliche Mischstufe, beispielsweise ein statischer Mischer und Wärmetauscher, geführt. Diese zusätzliche Mischstufe ist durch eine zweite Zahnradpumpe am Ausgang begrenzt. Dadurch wird es ermöglicht, in der zusätzlichen Mischstufe ein vom Extruderdruck unabhängiges Druckniveau aufzubauen. Der Druckverlauf in der Mischstufe ist neben den Geräteparametern (Durchmesser der einzelnen Wärmetauscherrohre, Länge, etc.) vom Durchsatz und der Viskosität der Schmelze abhängig. Damit können ein Eingangsdruck von ≥ 400 bar und ein Ausgangsdruck von ≥ 300 bar eingestellt werden kann und (ii) ein Abkühlen der Schmelze um beispielsweise ΔT = 50 °C, vorzugsweise ΔT = 100 °C, unter Ausnutzung des Erweichungseffekts der Schmelze herbeigeführt werden. Beide Maßnahmen führen zu einer höheren Gaslöslichkeit, so daß sich der überschüssige Gasanteil löst. Die homogene Polymer/Gas-Lösung bzw. einphasige Schmelze wird dann durch die zweite Zahnradpumpe in die Düse gefördert und entsprechend des Düsenprofils verformt. Beim Austritt aus der Düse erfolgt das Aufschäumen des Polymers zu der erfindungsgemäßen Schaumstruktur. Porengröße und Porendichte werden durch die Konzentration des homogen gelösten Gases bestimmt.

Durch die nachstehend Beispiele wird die vorliegende Erfindung näher erläutert.

### Beispiel 1

Die Extrusionsvorrichtungen entsprechen der in der WO 99/38604 beschriebenen Vorrichtung. Ein Granulat aus Polypropylen (PPC 3660 von Fina) wird durch einen auf 180 °C temperierten Extruder bei einem Durchsatz von 6 kg/h extrudiert. Bei einem Druck von 170 bar wird über eine Dosiervorrichtung das Gas, und zwar 4,1% Gew.-% CO₂, bezogen auf das eingesetzte Polymer, eingeleitet. Die Polymer-/Gasmischung wird über die Zahnradpumpe in die Mischeinrichtung geführt. Hier kann ein Druck eingestellt werden, der vom Druck im Extruder unabhängig ist. Der Druck über den Zahnradpumpen wird so eingestellt, daß sich ein Ausgangsdruck von etwa 150 bar bei gegebener Schmelzetemperatur von etwa 175°C ergibt. Die Verweilzeit in der Mischeinrichtung beträgt etwa 15 bis 20 Minuten. Der Druck hinter der zweiten Zahnradpumpe beträgt etwa 155 bar.

Bei Einsatz von 4,1 Gew.-% CO₂ und einer Schmelzetemperatur von 175°C wird die in Figuren 1A und 1B gezeigte Schaumstruktur erhalten. Der Schaum weist eine Porengröße von etwa 150 µm, eine Porendichte von 1x10⁶ Poren/cm³ und ein Hohlraumvolumen von > 95% auf. Die poröse Sekundärstruktur ist stark ausgebildet, was eine sehr hohe Porosität zur Folge hat.

### Beispiel 2

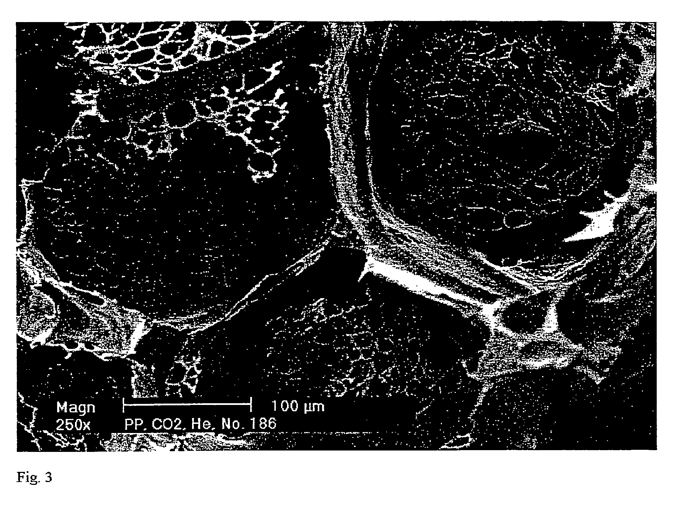

Die Durchführung entspricht Beispiel 1, wobei jedoch ein Gasgemisch aus 5% CO₂ und 0,65% Helium eingesetzt wurde. Bei einer Schmelzetemperatur von 175°C ergibt sich die in Figur 3 gezeigte Schaumstruktur. Der Schaum weist eine Porengröße von etwa 150 µm, eine Porendichte von 1x10⁶ Poren/cm³ und ein Hohlraumvolumen > von 95% auf. Die poröse Sekundärstruktur ist stark ausgebildet, was eine sehr hohe Porosität zur Folge hat.

## Patentansprüche

1. Poröser Formkörper auf Basis von mindestens einem thermoplastischen Polymer, **gekennzeichnet durch** eine Schaumstruktur, umfassend Poren als poröse Primärstruktur und Poren in den Porenwänden als poröse Sekundärstruktur.

2. Formkörper nach Anspruch 1, wobei die Schaumstruktur Poren als poröse Primärstruktur mit einer Offenzelligkeit ≥ 75% und ein Hohlraumvolumen ≥ 85% aufweist.

3. Formkörper nach Anspruch 1 oder 2 in Form einer Membran.

4. Formkörper nach Anspruch 1 als Membran mit einer Schaumstruktur auf Basis von mindestens einem thermoplastischen Polymer, wobei die Schaumstruktur Poren als poröse Primärstruktur mit einer Offenzelligkeit ≥ 75% und Poren in den Porenwänden als poröse Sekundärstruktur umfaßt und ein Hohlraumvolumen ≥ 85% aufweist.

5. Formkörper nach Anspruch 4, wobei der Porendurchmesser in der porösen Primärstruktur im Bereich von 30 µm bis 200 µm liegt.

6. Formkörper nach Anspruch 4 oder 5, wobei die Standardabweichung des mittleren Porendurchmessers in der porösen Primärstruktur < 20% beträgt.

7. Formkörper nach einen der Ansprüche 4 bis 6, wobei der Porendurchmesser in der porösen Sekundärstruktur ≤ 10 µm beträgt.

8. Formkörper nach einen der Ansprüche 4 bis 7, wobei das thermoplastische Polymer ausgewählt ist aus Polyolefinen, Polyestern, Polyamiden, Polysulfonen, Polyethersulfonen, Polystyrol, Cellulosederivaten, deren Substitutionsprodukten und Gemischen davon.

9. Formkörper nach einen der Ansprüche 4 bis 8, wobei die Membran ein- oder beidseitig verstärkt ist.

10. Verfahren zur Herstellung eines porösen Formkörpers auf Basis von mindestens einem themoplastischen Polymer, **gekennzeichnet durch** eine Schaumstruktur, umfassend Poren als poröse Primärstruktur und Poren in den Porenwänden als poröse Sekundärstruktur, insbesondere einer Membran gemäß einem der vorhergehenden Ansprüche, worin ein Porenbildner, enthaltend ein Gas oder Gasgemisch, zu einer Polymerschmelze aus mindestens einem amorphen und/oder teilkristallinen Polymer in einer Extrusionsvorrichtung gegeben wird, das Gemisch aus Polymerschmelze und Porenbildner in einer Mischeinrichtung zu einer einphasigen Schmelze verarbeitet wird und der Porenbildner nach Durchleiten **durch** eine formgebende Düse die einphasige Schmelze **durch** den eintretenden Druckabfall unter Erhalt der Schaumstruktur aufschäumt, wobei der Porenbildner in einer derartigen Menge zugegeben wird, daß die Gesamtkonzentration an in der einphasigen Schmelze gelöstem Gas oder Gasgemisch > 4 Gew.-% beträgt und die Verarbeitungstemperatur der einphasigen Schmelze unterhalb der Verarbeitungstemperatur der Polymerschmelze liegt.

11. Verfahren nach Anspruch 10, wobei das Gas oder Gasgemisch CO₂ und/oder He enthält.

12. Verfahren nach Anspruch 10 oder 11, wobei die Verarbeitungstemperatur der einphasigen Schmelze 20-100 °C unterhalb der Verarbeitungstemperatur der Polymerschmelze liegt.

## Claims

1. Porous formed body based on at least one thermoplastic polymer, **characterized by** a foam structure comprising pores as a porous primary structure and pores in the pore walls as a porous secondary structure.

2. Formed body according to Claim 1, wherein the foam structure includes pores as a porous primary structure having an open-cell content ≥ 75% and a void volume ≥ 85%.

3. Formed body according to Claim 1 or 2 in the form of a membrane.

4. Formed body according to Claim 1 as a membrane having a foam structure based on at least one thermoplastic polymer, wherein the foam structure comprises pores as a porous primary structure having an open-cell content ≥ 75% and pores in the pore walls as a porous secondary structure and includes a void volume ≥ 85%.

5. Formed body according to Claim 4, wherein the pore diameter in the porous primary structure is in the range from 30 µm to 200 µm.

6. Formed body according to Claim 4 or 5, wherein the standard deviation of the average pore diameter in the porous primary structure is < 20%.

7. Formed body according to any one of Claims 4 to 6, wherein the pore diameter in the porous secondary structure is ≤ 10 µm.

8. Formed body according to any one of Claims 4 to 7, wherein the thermoplastic polymer is selected from polyolefins, polyesters, polyamides, polysulfones, polyethersulfones, polystyrene, cellulose derivatives, their substitution products and mixtures thereof.

9. Formed body according to any one of Claims 4 to 8, wherein the membrane is one- or both-sidedly reinforced.

10. Method of producing a porous formed body based on at least one thermoplastic polymer, **characterized by** a foam structure comprising pores as a porous primary structure and pores in the pore walls as a porous secondary structure, more particularly a membrane according to any one of the preceding claims, which comprises a pore-former comprising a gas or gas mixture being added to a polymer melt consisting of at least one amorphous and/or partly crystalline polymer in an extrusion device, the mixture of polymer melt and pore-former being processed in a mixing station to form a single-phase melt and the pressure drop which occurs after passage through a forming die causing the pore-former to foam up the single-phase melt to obtain the foam structure, wherein the pore-former is added in such an amount that the total concentration of gas or gas mixture dissolved in the single-phase melt is > 4% by weight and the processing temperature of the single-phase melt is below the processing temperature of the polymer melt.

11. Process according to Claim 10, wherein the gas or gas mixture comprises CO₂ and/or He.

12. Process according to Claim 10 or 11, wherein the processing temperature of the single-phase melt is 20-100°C below the processing temperature of the polymer melt.

## Revendications

1. Corps de moule poreux à base d'au moins un polymère thermoplastique, **caractérisé par** une structure en mousse, englobant des pores faisant office de structure primaire poreuse et des pores dans les parois poreuses faisant office de structure secondaire poreuse.

2. Corps de moule selon la revendication 1, **caractérisé en ce que** la structure en mousse présente des pores faisant office de structure primaire poreuse à ouverture d'alvéoles ≥ 75% et un volume de cavité ≥ 85%.

3. Corps de moule selon la revendication 1 ou 2, sous forme de membrane.

4. Corps de moule selon la revendication 1 sous forme de membrane avec une structure en mousse à base d'au moins un polymère thermoplastique, sachant que la structure en mousse englobe des pores faisant office de structure primaire poreuse à ouverture d'alvéoles ≥ 75% et des pores dans les parois poreuses faisant office de structure secondaire poreuse et présente un volume de cavité ≥ 85%.

5. Corps de moule selon la revendication 4, **caractérisé en ce que** le diamètre des pores de la structure primaire poreuse est situé entre 30 µm et 200 µm.

6. Corps de moule selon la revendication 4 ou 5, **caractérisé en ce que** l'écart standard du diamètre de pores moyen de la structure primaire poreuse est < 20%.

7. Corps de moule selon l'une des revendications 4 à 6, **caractérisé en ce que** le diamètre des pores de la structure secondaire poreuse est ≤ 10 µm.

8. Corps de moule selon l'une des revendications 4 à 7, **caractérisé en ce que** le polymère thermoplastique est choisi parmi les polyoléfines, les polyesters, les polyamides, les polysulfones, les polyéthersulfones, les polystroles, les dérivés de cellulose, leurs produits de substitution et composés.

9. Corps de moule selon l'une des revendications 4 à 8, **caractérisé en ce que** la membrane est renforcée sur un ou sur les deux côtés.

10. Procédé de fabrication d'un corps de moule poreux à base d'au moins un polymère thermoplastique, **caractérisé par** une structure en mousse, englobant des pores faisant office de structure primaire poreuse et des pores dans les parois poreuses faisant office de structure secondaire poreuse, en particulier de fabrication d'une membrane conformément à l'une des revendications précédentes, dans lequel un générateur de pores contenant un gaz ou un mélange de gaz est ajouté à une fusion polymère à base d'au moins un polymère amorphe ou partiellement cristallin dans un dispositif d'extrusion, où le mélange de fusion polymère et de générateur de pores est transformé dans un dispositif de mélange en une fusion monophasée et où, après être passée dans une filière de façonnage, le générateur de pores fait mousser la fusion monophasée de par la chute de pression entrant tout en préservant la structure en mousse, sachant que le générateur de pores est ajouté dans une telle quantité que la concentration totale en gaz dissout ou mélange de gaz dans la fusion monophasée est > 4 % du poids et que la température de transformation de la fusion monophasée est inférieure à la température de transformation de la fusion polymère.

11. Procédé selon la revendication 10, **caractérisé en ce que** le gaz ou le mélange de gaz contient du CO₂ et/ou du He.

12. Procédé selon la revendication 10 ou 11, **caractérisé en ce que** la température de transformation de la fusion monophasée est inférieure de 20 à 100°C à la température de transformation de la fusion polymère.
